# EUROPEAN PATENT SPECIFICATION

(11) **EP 3 623 087 B1**
(45) Date of publication and mention of the grant of the patent: **26.05.2021**
(21) Application number: 19196765.2
(22) Date of filing: 11.09.2019
(51) Int. Cl.: B23B 31/19, B23B 31/12, B23B 31/26, B23B 31/16, B23B 31/175

(54) **IMPROVED MANDREL FOR RESIN COATING SYSTEMS.**
VERBESSERTER DORN FÜR HARZBESCHICHTUNGSSYSTEME
MANDRIN AMÉLIORÉ POUR SYSTÈMES DE REVÊTEMENT DE RÉSINE

(30) Priority: 12.09.2018 IT 201800008538
(43) Date of publication of application: 18.03.2020
(73) Proprietor: Amer S.p.A., 36078 Valdagno (VI) (IT)
(72) Inventor: BATTISTELLA, Francesco, 36078 VALDAGNO (VI) (IT)
(74) Representative: Marchioro, Paolo

(56) References cited:
- US-A- 1 318 090
- US-A- 2 770 462
- US-A- 2 881 006

## Description

The invention relates to a mandrel for gripping a tool, or an object , as per the preamble of claim 1. An example of such a mandrel is disclosed by US 1 318 090 A.

These kind of mandrels are particularly suited to be used in resin coating systems configured to place a layer of insulating resin on the surfaces of the electric components of an electric motor, in particular rotors or stators.

It is known that the electrical components of an electric motor, such as rotors and/or stators, may consist of a plurality of windings made up of conductors, typically made of copper, on a support structure. Once these windings are in place, they must be insulated at their surfaces in order to prevent any accidental electrical contact with other electrical components belonging to the same electric motor.

In this regard, it is known the use of particular machines, called "resin coating systems" in jargon, equipped with a translation system on which a plurality of the aforementioned electrical components are arranged in sequence. This translation system moves the various electrical components one by one in a resin application station, where the aforesaid layer of insulating resin is applied on their surface. Specifically, during this resin treatment operation, the resin is deposited, for example by gravity, on the upper part of said electrical component, which is set rotating according to an axis of rotation that is perpendicular to the direction according to which the resin is deposited. In this way the resin is progressively distributed over all or part of the surface of the electrical component.

In order to be able to transport this electrical component to said resin application station and, at the same time, in order to allow it to rotate, the resin coating systems are equipped with special mandrels, in a number that can even be more than one hundred.

More specifically, these mandrels for locking rotors usually have a hole in the centre which extends longitudinally and in which the shaft of one of said rotors is inserted and locked.

Alternatively, to lock the stators, special clamps can be used that are able to lock the stator body on the mandrel by exerting a grip on the inner or outer edge of the stator itself.

As specifically regards the structure of the components making up the mandrels of the prior art, some types of mandrels are known which have a substantially cylindrical mandrel body with or without a central hole and a series of clamps, typically three clamps, configured to be moved radially with respect to said cylindrical body and/or with respect to the central hole. To carry out this movement, the mandrel is equipped with a series of internal gears which enable the clamps to be moved synchronously with a single movement towards the centre of the cylindrical body or in the opposite direction. However, these types of mandrels of the known type have some recognized drawbacks.

In particular, the structures of the mandrels of the known type, as described above, are provided with a series of internal gears which are very sensitive to dirt in general and in particular to the shavings which are formed during the processing of a piece. Even more specifically, in the specific field of use described above, where operations are carried out in particularly dirty environments, the proper operation of these types of mandrels is significantly affected by possible treatment residues, in particular by resin residues which tend to flow and penetrate between the gears of the mandrels themselves. Since, in fact, said resin tends to solidify as it cools down, the gears between which said resin has penetrated jam and seize, causing the mandrel to become unusable. This problem is particularly true in resin coating systems which, as mentioned above, may even consist of several hundred mandrels. In fact, the jamming and seizing of the various mandrels in a resin coating system disadvantageously causes continuous machine shutdowns, clearly not acceptable from the standpoint of production times and the related costs. Furthermore, even if it were possible to use the above mentioned mandrels of the prior art in a clean environment, said series of gears used to move the clamps would still require periodic and continuous maintenance operations in order to ensure their lubrication and therefore optimal operation.

Moreover, again as a consequence of the large number and complexity of the mechanical components making up the mandrels of the prior art, the latter are particularly subject to wear and tear and to breakages.

Another, yet not the least disadvantage of the mandrels of the prior art, caused once again by their complex mechanical structure, is represented by their excessive overall dimensions.

The present invention intends to overcome all the drawbacks mentioned above.

In particular, it is one of the objects of the invention to provide a mandrel for gripping an object, particularly rotors or stators of an electric motor, the operation of which is not affected by the presence of the dirt which is normally produced in the environments where it is typically used.

It is another object of the invention to provide a mandrel for gripping an object with an extremely low degree of wear and risk of breakage.

It is a further object of the invention to provide a mandrel for gripping an object that requires an extremely reduced level of maintenance, if at all.

Accordingly, it is an object of the invention to provide a mandrel which reduces to a minimum, if not completely eliminates, the machine shutdowns of the systems in which this mandrel is used.

Still another object of the invention is to provide a mandrel for gripping objects having a reduced number of components and a very low level of complexity. Consequently, it is an object of the invention to provide a gripping mandrel that is easy to assemble and disassemble if maintenance is needed.

Another object of the invention is to provide a mandrel for gripping an object which is self-lubricating and keeps the various mechanical components that make it up clean through the movement of the clamps.

A final, yet not the least object of the invention is to provide a mandrel for gripping an object having reduced overall dimensions, but at the same time having a wide clamping range to grip objects.

The objects illustrated above are achieved through the production of the gripping mandrel in accordance to claim 1.

Further characteristics of the gripping mandrel of the invention are described in the dependent claims.

The above objects, together with the advantages described below, will be highlighted in the description of some preferred embodiments of the invention that are provided, by way of non-limiting example, with reference to the attached drawings, wherein:
- Fig. 1 shows an axonometric view of the mandrel of the invention according to a first preferred embodiment;
- Fig. 2 shows an exploded axonometric view of the mandrel of the invention according to the first preferred embodiment;
- Fig. 3 shows a front view of the mandrel of the invention according to the first preferred embodiment, in the release position;
- Fig. 4 shows a sectional view, according to section plane IV-IV of Fig. 3, of the mandrel of the invention according to the first preferred embodiment, in the release position;
- Fig. 5 shows a sectional view, according to section plane V-V of Fig. 3, of the mandrel of the invention according to the first preferred embodiment, in the release position;
- Fig. 6 shows a sectional view, according to section plane VI-VI of Fig. 5, of the mandrel of the invention according to the first preferred embodiment, in the release position;
- Fig. 7 shows a front view of the mandrel of the invention according to the first preferred embodiment, in the locked position;
- Fig. 8 shows a sectional view, according to section plane VIII-VIII of Fig. 7, of the mandrel of the invention according to the first preferred embodiment, in the locked position;
- Fig. 9 shows a sectional view, according to section plane IX-IX of Fig. 7, of the mandrel of the invention according to the first preferred embodiment, in the locked position;
- Fig. 10 shows a sectional view, according to section plane X-X of Fig. 9, of the mandrel of the invention according to the first preferred embodiment, in the locked position;
- Fig. 11 shows a breakout axonometric view of the mandrel of the invention according to the first embodiment;
- Fig. 12 shows an axonometric view of the mandrel body belonging to the mandrel of the invention shown in Fig. 1;
- Fig. 13 shows a front view of the mandrel body belonging to the mandrel of the invention shown in Fig. 1;
- Fig. 14 shows an axonometric view of the gripping assembly belonging to the mandrel of the invention shown in Fig. 1;
- Fig. 15 shows an axonometric view of the mandrel of the invention according to a second preferred embodiment;
- Fig. 16 shows an exploded axonometric view of the mandrel of the invention according to the second preferred embodiment;

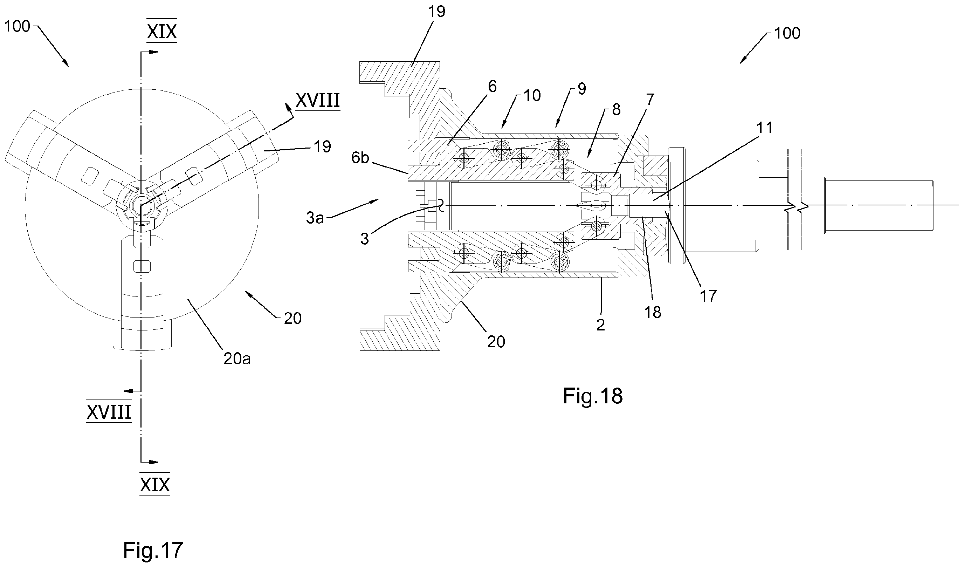

- Fig. 17 shows a front view of the mandrel of the invention according to the second preferred embodiment, in the release position;
- Fig. 18 shows a sectional view, according to section plane XVIII-XVIII of Fig. 17, of the mandrel of the invention according to the second preferred embodiment, in the release position;

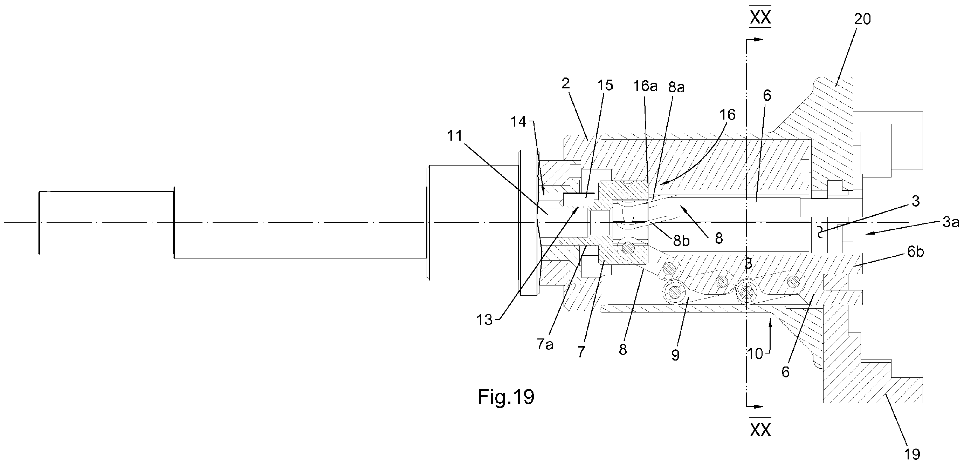

- Fig. 19 shows a sectional view, according to section plane XIX-XIX of Fig. 17, of the mandrel of the invention according to the second preferred embodiment, in the release position;

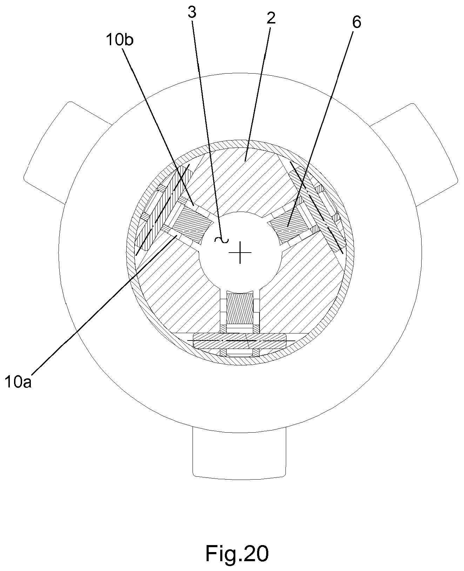

- Fig. 20 shows a sectional view, according to section plane XX-XX of Fig. 19, of the mandrel of the invention according to the second preferred embodiment, in the release position;

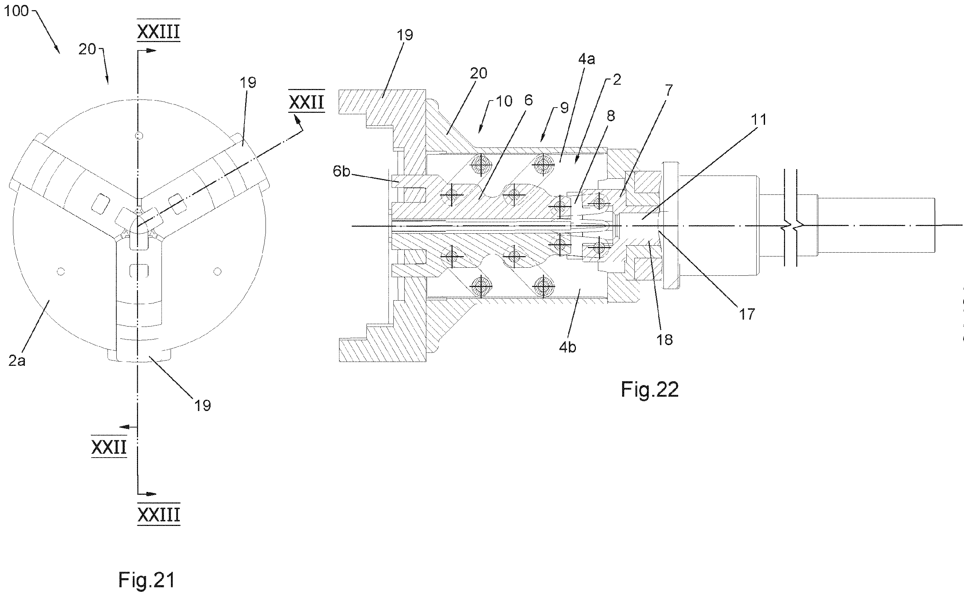

- Fig. 21 shows a front view of the mandrel of the invention according to the second preferred embodiment, in the locked position;
- Fig. 22 shows a sectional view, according to section plane XXII-XXII of Fig. 21, of the mandrel of the invention according to the second preferred embodiment, in the locked position;

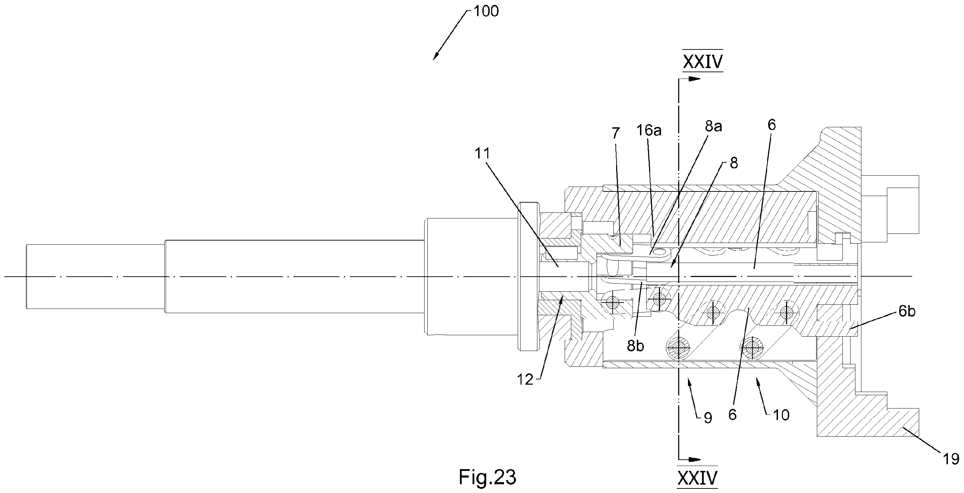

- Fig. 23 shows a sectional view, according to section plane XXIII-XXIII of Fig. 21, of the mandrel of the invention according to the second preferred embodiment, in the locked position;

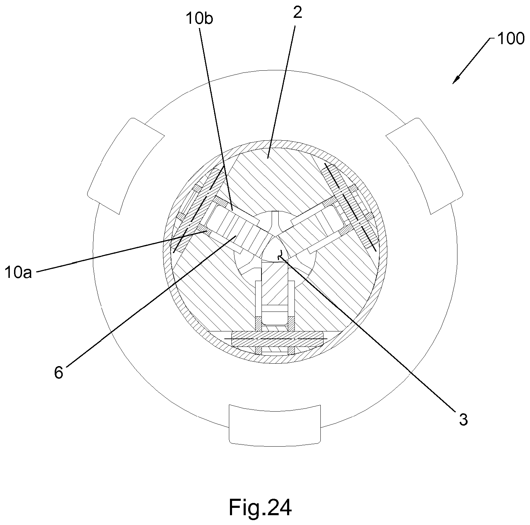

- Fig. 24 shows a sectional view, according to section plane XXIV-XXIV of Fig. 23, of the mandrel of the invention according to the second preferred embodiment, in the locked position;

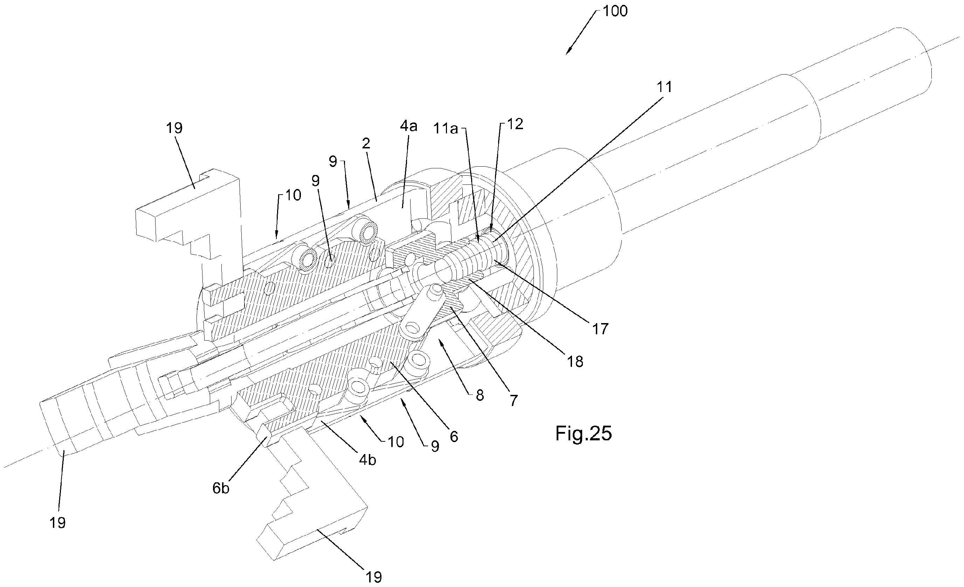

- Fig. 25 shows a breakout axonometric view of the mandrel of the invention according to the second embodiment.

The mandrel for gripping an object that is the subject of the invention, which is preferably designed to grip a rotor or a stator of an electric motor, is shown in a first embodiment in Figures from 1 to 14, where it is indicated as a whole by **1,** and in a second embodiment in Figures from 15 to 25, where it is indicated as a whole by **100.**

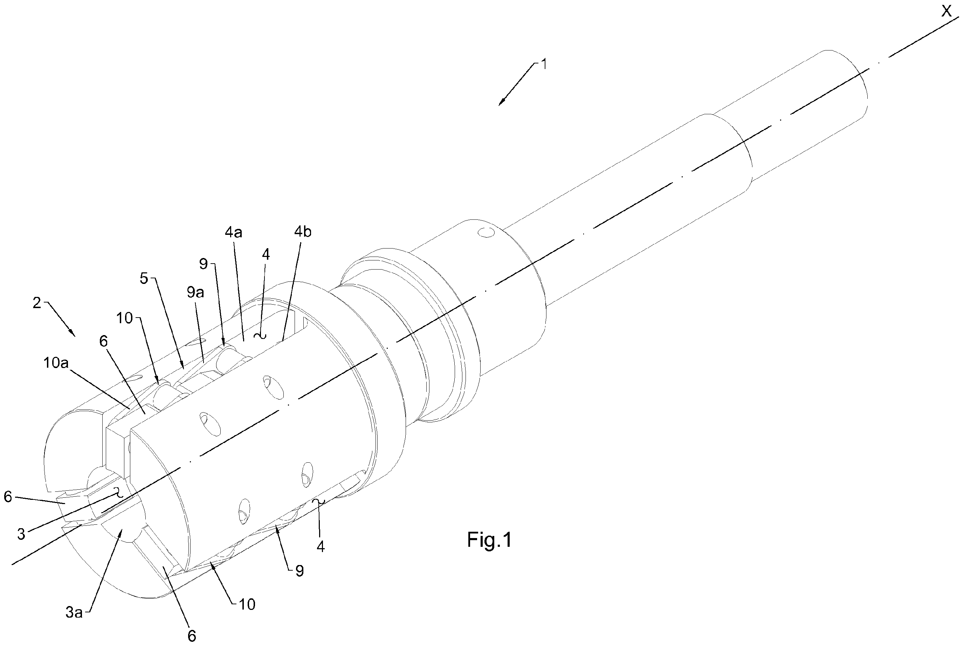

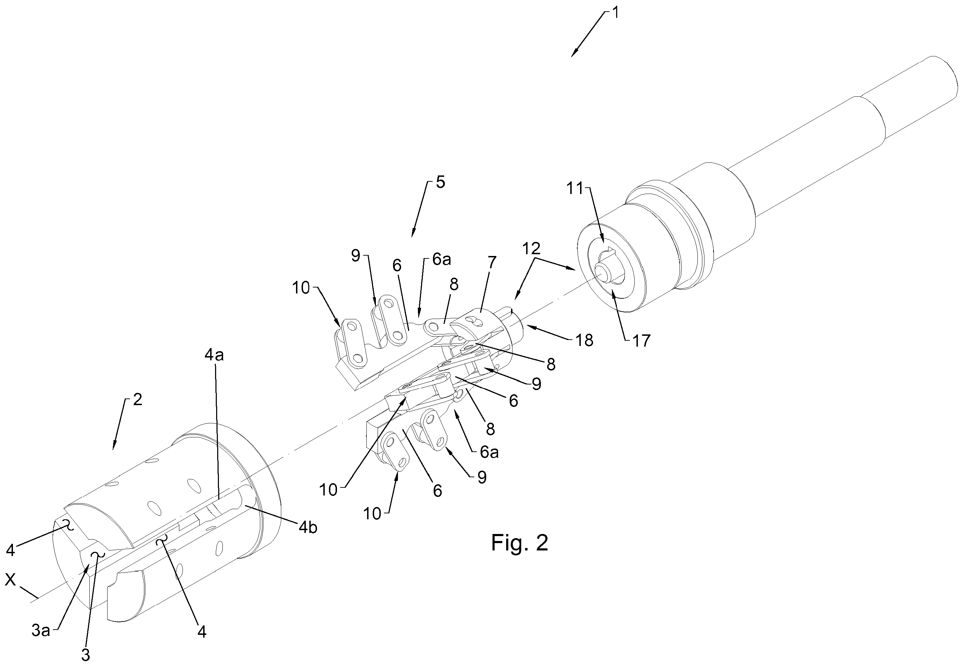

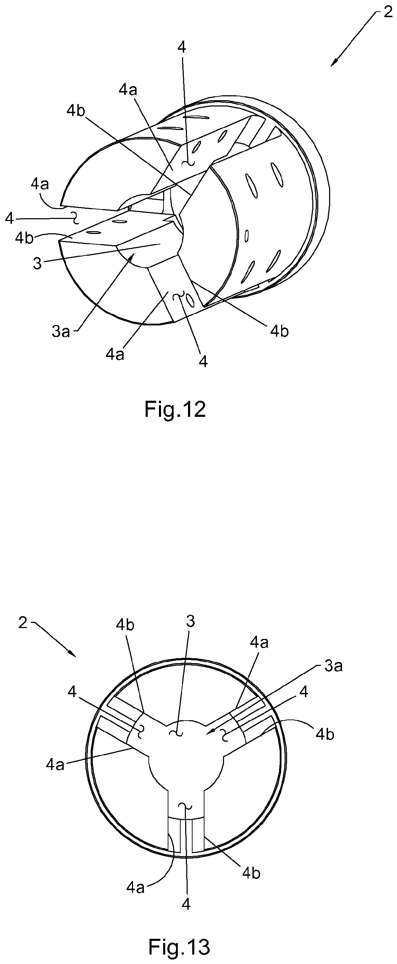

With regard to the first embodiment, as can be seen in Figures 1 and 2 and in the detail of Figures 12 and 13, the mandrel **1** comprises a mandrel body **2,** preferably cylindrical in shape.

It cannot be excluded that in variant embodiments of the mandrel **1** the mandrel body **2** may have a shape other than cylindrical.

The mandrel body **2** itself is also provided with a central hole **3** which extends along a longitudinal axis **X.** Said central hole **3** has an inlet mouth **3a** for the insertion of at least one part of an object. Preferably, if said object is an electric rotor, said central hole **3** is configured to at least partially house the shaft of the rotor itself.

As shown in Figure 12, according to said first preferred embodiment of the invention, said mandrel body **2** is provided with three seats **4** defined therein and extending radially and in different angular directions with respect to one another starting from the longitudinal axis **X** of the central hole **3.** Preferably, according to the preferred embodiment of the invention, each of the three angular directions in which said seats **4** extend is angularly spaced from the adjacent ones by an angle of 120°.

However, it cannot be excluded that in variant embodiments of the invention the number of radially extending seats **4** may be a number other than three, provided that it is greater than one, and that the angular distance of the directions in which said three seats **4** extend may be different from 120°.

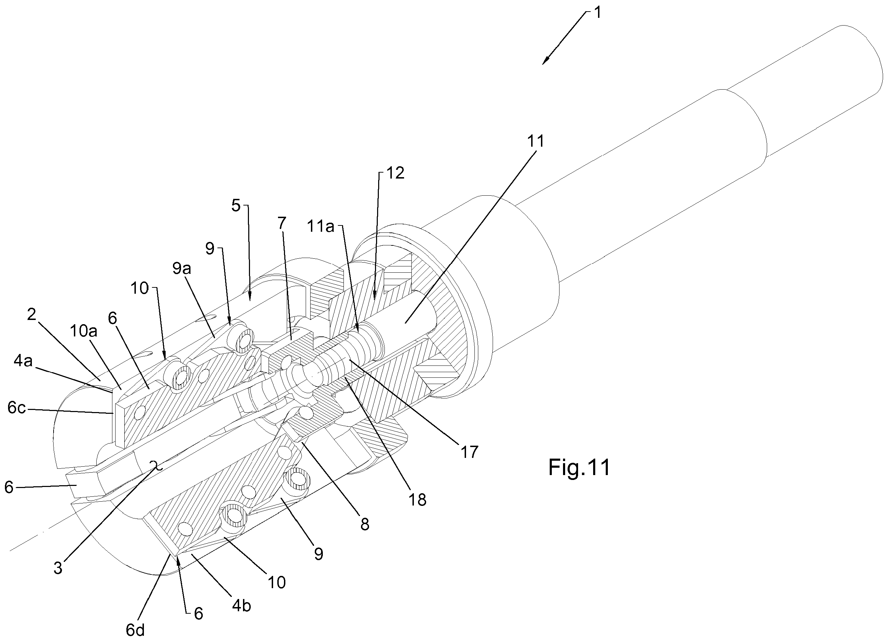

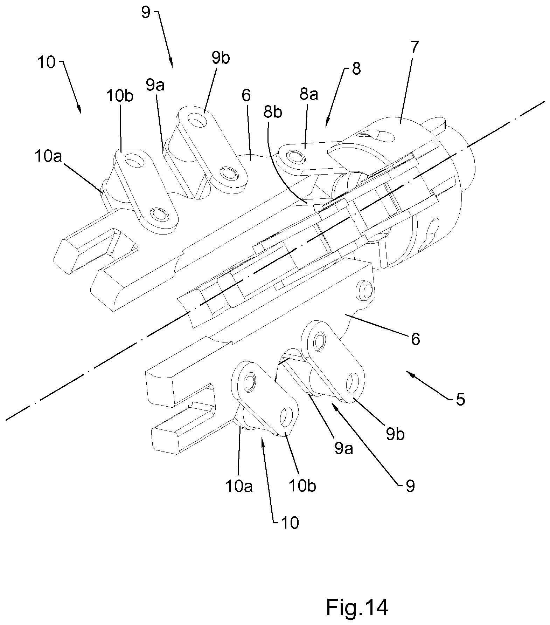

The mandrel **1** that is the subject of the invention also comprises, as can be seen in Figures 1 and 2 and in the detail of Figure 14, a gripping assembly **5** comprising in turn, according to said first preferred embodiment, three gripping clamps **6** having a substantially longitudinal development, each of which is arranged in one of said seats **4,** as can be seen in Figure 11.

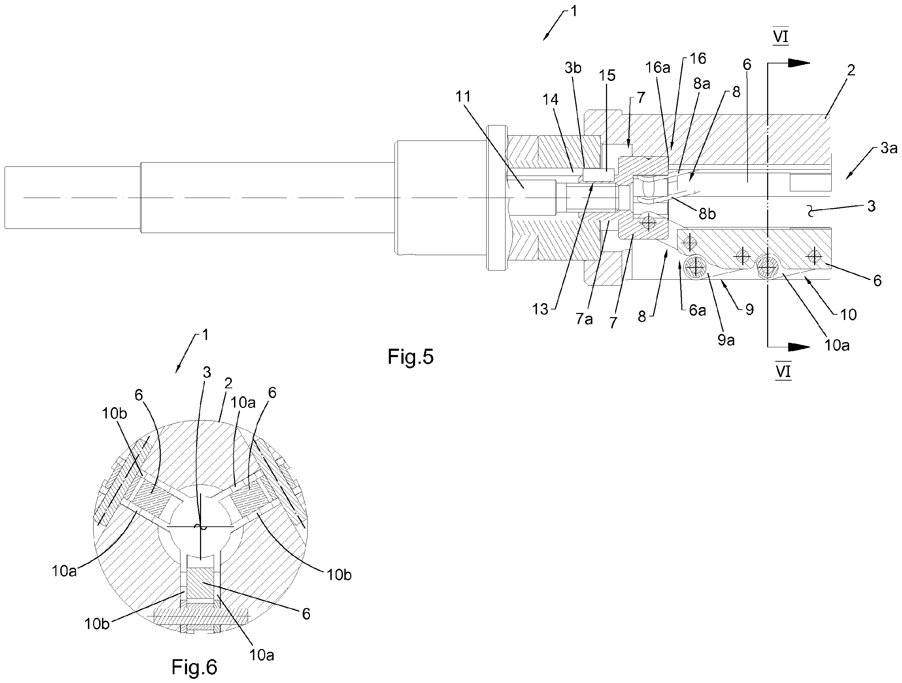

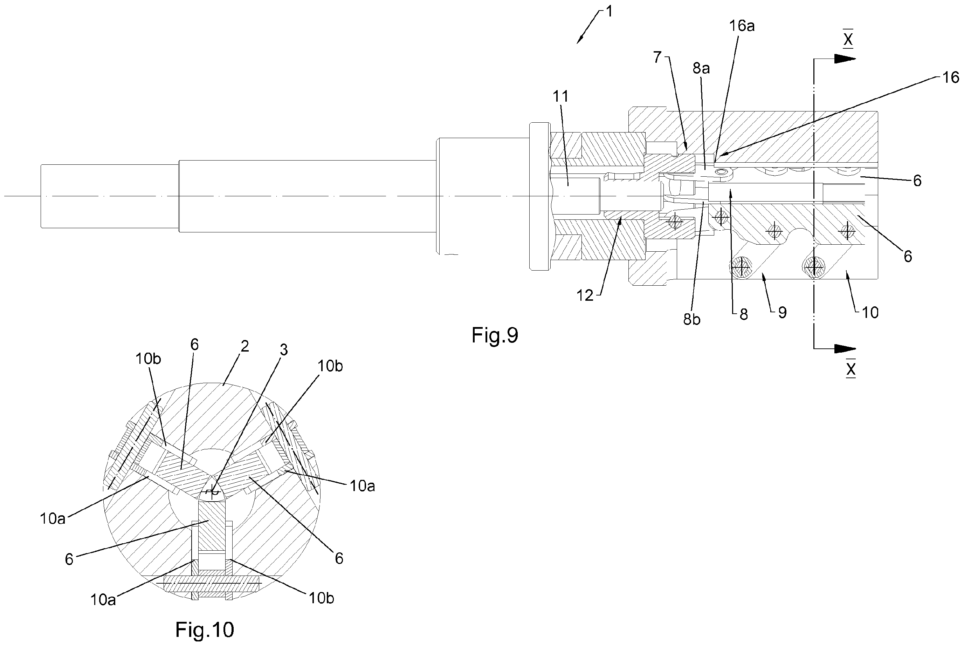

The gripping assembly **5** furthermore comprises a supporting element **7** positioned inside said central hole **3,** on the opposite side of the inlet mouth **3a.** Said supporting element **7,** as can be seen in Figures 5 and 9, is configured to slide along said central hole **3** according to the direction defined by the longitudinal axis **X.**

In the mandrel **1** of the invention each gripping clamp **6** is operatively connected, at a first end **6a** thereof, to the supporting element **7** by means of a first connecting rod **8.** This connection allows the transmission of motion from the supporting element **7,** which slides along said central hole **3,** to said clamps **6.**

Moreover, each of said clamps **6** is operatively connected to the internal walls **4a** and **4b** of the relative seat **4** by means of a second connecting rod **9** and a third connecting rod **10,** so that the rectilinear movement of said supporting element **7** along the central hole **3** causes the rigid translation of each of the gripping clamps **6** with respect to the mandrel body **2** between a locking position, in this case of the rotor shaft, as shown in Figures from 7 to 10, and a release position of the same shaft, as shown in Figures from 3 to 6. Clearly, the translation of the clamps **6** can take place in the opposite direction, that is, from the release position to the locking position.

In the present context, the expression "rigid translation" of the gripping clamps **6** means the movement of the gripping clamps **6** both in the radial direction and in the axial direction, with the axis of the gripping clamps **6** parallel to the longitudinal axis **X** of the mandrel body **2.** As previously stated, said rigid translation movement of the gripping clamps **6** is ensured by said second connecting rod **9** and third connecting rod **10.**

Even more specifically, according to the preferred embodiment of the invention, when the supporting element **7** is moved forward along said central hole **3** towards the inlet mouth **3a** of the latter, the thrusting action of the first connecting rod **8,** in cooperation with the movement imposed by the second connecting rod **9** and by the third connecting rod **10** with respect to the mandrel body **2,** determines the rigid translation of each clamp **6** to said release position. On the contrary, when the supporting element **7** is retracted in said central hole **3,** said first connecting rod **8,** in cooperation with said second connecting rod **9** and said third connecting rod **10,** determines the rigid translation of each of said clamps **6** to said locking position, leading to the contact between the inner surface of each clamp **6** and, in this case, the shaft of the rotor to be locked, thus gripping the latter.

Furthermore, according to the invention, as can be seen in Figure 1 and in Figure 14, each of the second connecting rods **9** and each of the third connecting rods **10** which operatively connect a corresponding clamp **6** to the mandrel body **2** is defined by two small plates, respectively indicated by **9a** and **9b** and by **10a** and **10b** in the figures, interposed on opposite sides between the gripping clamp **6** itself and one of the two walls **4a** and **4b** of the corresponding seat **4.**

This embodiment, in fact, besides enabling the clamps **6** to be translated with respect to the mandrel body **2,** also enables the plates **9a, 9b, 10a** and **10b** to interact with the walls **4a** and **4b** of the seats **4** and with the side walls **6c** and **6d** of the gripping clamps **6** during said translation, as can be seen in Figure 11. This interaction advantageously makes it possible to maintain said walls **4a, 4b, 6c** and **6d** and the plates **9a, 9b, 10a** and **10b** clean and lubricated, removing any debris or dirt in general which are formed in the work environment where said mandrels **1** are used. This self-cleaning and self-lubrication of said walls makes it possible to prevent any machine shutdowns necessary to allow an operator to intervene and carry out maintenance on the mandrel itself.

In the present context, the term "interaction", with reference to the plates **9a, 9b, 10a** and **10b** with respect to the walls **4a** and **4b** of the seats **4** and of the side walls **6c** and **6d** of the clamps **6,** means the sliding movement of the first with respect to the second, which facilitates the removal of any debris that is deposited during the use of the mandrel **1.**

According to the preferred embodiment of the invention, each of the first connecting rods **8** is also defined by two small plates **8a** and **8b** hinged at their ends respectively to the side walls of the first end **6a** of each gripping clamp **6** and to the supporting element **7,** as shown in Figures 5 and 9.

As shown in Figure 5, a further characteristic of the mandrel of the invention is constituted by the fact that the supporting element **7** is prevented from rotating with respect to the mandrel body **2** and this impediment preferably occurs thanks to the presence of a first groove **13** and a second groove **14** respectively defined on the lateral surface **7a** of the supporting element **7** and on the inner surface **3b** of the central hole **3** and through the insertion of a mechanical key **15** in said grooves **13** and **14.**

However, in order to allow the rectilinear movement of said supporting element **7** along the direction defined by the longitudinal axis **X,** according to the preferred embodiment described herein, the second groove **14** has a length, in the direction parallel to said longitudinal axis **X,** which is greater than the length of the mechanical key **15.** Nonetheless, it cannot be excluded that in alternative embodiments the first groove **13,** defined on the supporting element **7,** may have a length, in the direction parallel to the longitudinal axis **X,** which is greater than the length of the mechanical key **15,** obtaining in the same way the sliding movement of the supporting element **7** itself along said direction defined by the longitudinal axis **X.**

Furthermore, it cannot be excluded that in different embodiments of the invention this impediment to the rotation of the supporting element **7** and equally its movement along the direction defined by the longitudinal axis **X** may be obtained with alternative mechanical solutions.

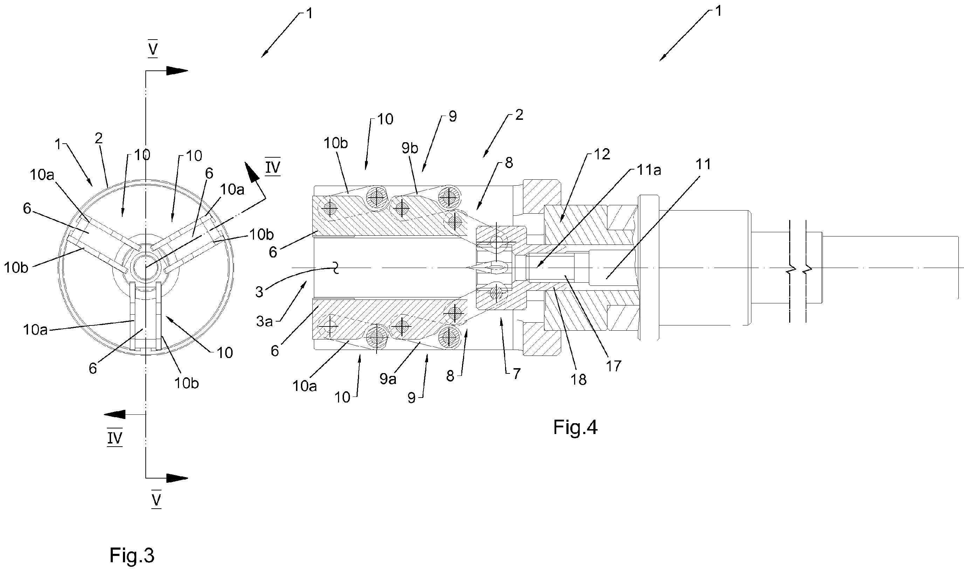

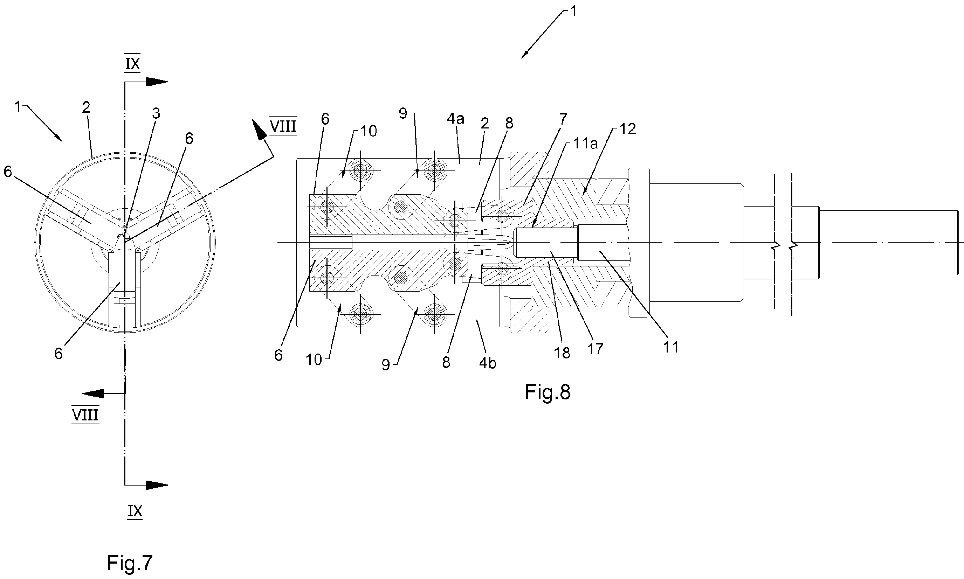

With regard, again, to the supporting element **7,** as can be seen in Figures 4, 8 and 11, it is operatively connected to a drive shaft **11** on the opposite side of the gripping clamps **6,** by means of a motion conversion system **12** configured to convert the rotary motion of said drive shaft **11** into the rectilinear motion of the supporting element **7** along the longitudinal axis **X.**

In particular, according to the first preferred embodiment of the invention shown in Figure 11, the motion conversion system **12** comprises a threaded screw **17** at the level of the end **11a** of the drive shaft **11** facing the supporting element **7** and also comprises a counter-threaded nut **18** in the same supporting element **7** in such a way that the rotation of the drive shaft **11** generates the screwing or unscrewing of the counter-threaded nut **18** on/from the threaded screw **17,** in turn creating, in cooperation with said system preventing the rotation of the supporting element **7,** the rectilinear movement of the latter along the longitudinal axis **X** with respect to the mandrel body **2.** Nonetheless, also with regard to the motion conversion system **12,** it cannot be excluded that it may be implemented, according to alternative embodiments of the mandrel **1** of the invention, in a different way with respect to how it has been described with reference to the preferred embodiment.

Furthermore, as regards the movement of the supporting element **7** inside said central hole **3,** according to the invention it is limited beyond a certain position in the direction of the inlet mouth **3a** by the definition of a stop element **16,** as shown in Figures 5 and 9.

In particular, this stop element **16** is created by making a counteracting wall **16a** in the central hole **3** whose diameter is smaller than the diameter of the supporting element **7,** thereby obviously preventing the sliding movement of the supporting element **7** itself beyond said counteracting wall **16a.**

As regards the second embodiment of the mandrel **100** of the invention, represented in Figures from 15 to 25, it substantially has all the features described for the aforementioned first embodiment of the mandrel and for this reason in these figures the elements in common with said first embodiment are indicated by the same numerical references. For this reason, with reference to said elements, refer to the description provided for the first embodiment of the mandrel **1** of the invention.

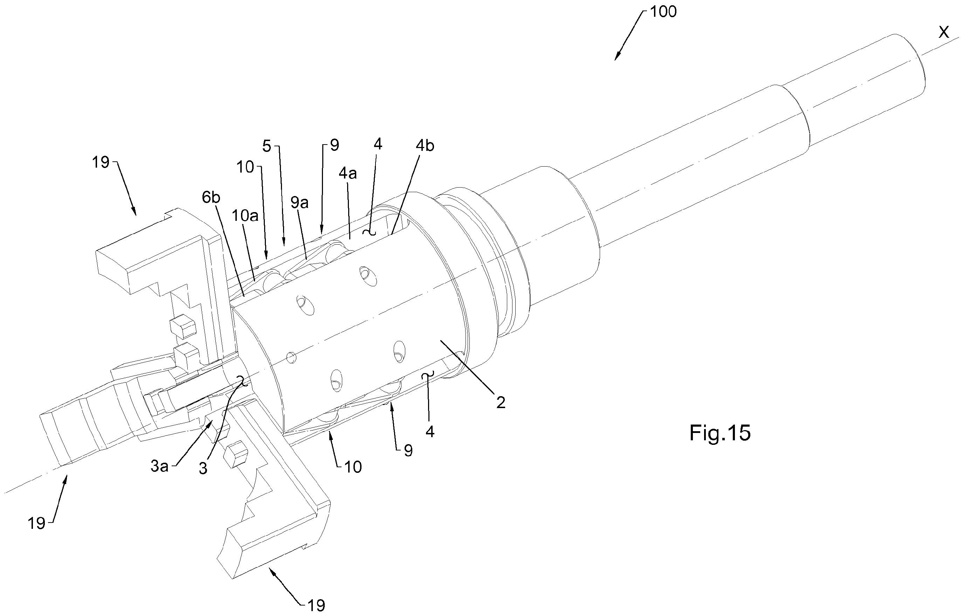

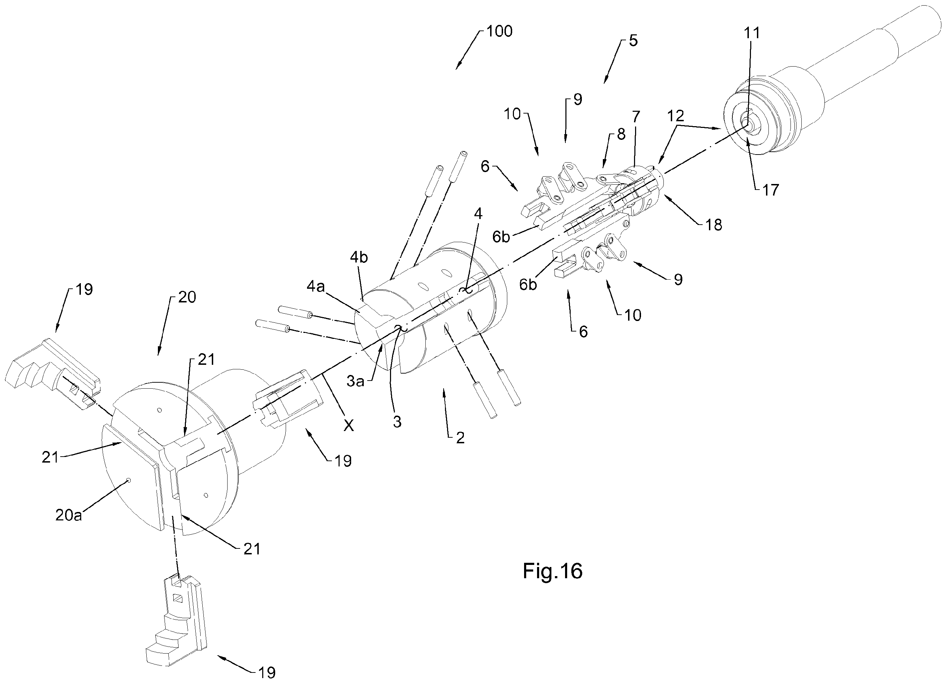

In addition to said common characteristics, the second embodiment of the mandrel **100,** as shown in Figures 15 and 16, has a jaw **19** which is solidly coupled with the free end **6b** of each of the gripping clamps **6.** Said jaw **19** includes a gripping point in radial direction, defined at a greater distance from the longitudinal axis **X** compared to the gripping point of said gripping clamps **6.** In particular, said gripping point, unlike that of said clamps **6,** is external with respect to the mandrel body **2,** in such a way that, as previously mentioned, in cooperation with the gripping points of the other jaws **19,** it can enable, for example, the locking of a stator body or of any other component or object to be processed on the mandrel **100,** exerting a grip on the outer or inner edge of the stator itself or of any other component or object.

In particular, as can be seen in Figure 16, said second embodiment of the mandrel **100** of the invention, besides providing for the addition of said jaws **19,** also provides for the use of a further cap **20** positioned so that it is superimposed to the mandrel body **2** and on the front surface **20a** of which there are three slots **21** arranged radially and intended to guide the radial movement of the jaws **19** themselves.

As previously mentioned, one or more mandrels **1** and/or **100** of the invention can be used in a resin coating system, not shown in the figures, configured to provide the electrical components of an electric motor, preferably the rotors or stators, with a resin coating.

On the basis of the foregoing, therefore, the improved mandrel that is the subject of the invention achieves all the set purposes.

In particular, the invention achieves the object to provide a mandrel for gripping an object, particularly rotors and/or stators of an electric motor, the operation of which is not affected by the dirt present in the environments where it is normally used.

The invention also achieves the object to provide a mandrel for gripping an object having an extremely low degree of wear and risk of breakage.

A further object achieved by the invention is to provide a mandrel for gripping an object that requires an extremely reduced level of maintenance, if at all. Accordingly, the invention achieves also the object to provide a mandrel which reduces to a minimum, if not completely eliminates, the machine shutdowns of the systems in which said mandrel is used.

Still another object achieved by the invention is to provide a mandrel for gripping objects having a reduced number of components and a highly decreased level of complexity.

Accordingly, the invention achieves the object to provide a gripping mandrel that is easy to assemble and disassemble if maintenance is needed.

Another object achieved by the invention is to provide a mandrel for gripping an object which is self-lubricating and makes it possible to keep the various mechanical components that make it up clean during the movement of the clamps.

Finally, the invention achieves also the object to provide a mandrel for gripping an object which has reduced overall dimensions but at the same time a large object clamping range.

## Claims

1. Mandrel (1, 100) for gripping an object, of the type comprising:
• a mandrel body (2) provided with:
- a central hole (3) which extends along a longitudinal axis (X) and which is provided with an inlet mouth (3a) for the insertion of at least a part of said object;
- at least two seats (4) which extend radially and in angular directions different from each other starting from said longitudinal axis (X) of said central hole (3);
• a gripping assembly (5) comprising:
- at least two gripping clamps (6) with substantially longitudinal extension, each of said gripping clamps (6) being placed in one of said seats (4);
- a supporting element (7) positioned in said central hole (3) on the opposite side of said inlet mouth (3a), said supporting element (7) being configured to slide along said central hole (3) according to said longitudinal axis (X), each of said gripping clamps (6) being operatively connected to said supporting element (7) at the level of a first end (6a) thereof by means of a first connecting rod (8)
**characterized in that**
each of said gripping clamps (6) is operatively connected to the internal walls (4a, 4b) of said seats (4) by means of a second connecting rod (9) and a third connecting rod (10), so that the rectilinear movement of said supporting element (7) causes the rigid translation of each of said gripping clamps (6) with respect to said mandrel body (2) between a position in which said object is locked and a position in which it is released or vice versa, each one of said second connecting rod (9) and third connecting rod (10) being defined by means of two small plates (9a, 9b, 10a, 10b) inserted on opposite sides between said gripping clamp (6) and one of said walls (4a, 4b) of said seat (4), so that said plates (9a, 9b, 10a, 10b) interact with said walls (4a, 4b) of said seat (4) and the side walls (6c, 6d) of said gripping clamp (6) during said rigid translation.

2. Mandrel (1, 100) according to claim 1, **characterized in that:**
- said gripping assembly (5) comprises three gripping clamps (6) operatively connected to said supporting element (7) at an angular distance from each other equal to 120°;
- said mandrel body (2) comprises three of said seats (4) placed at an angular distance from each other equal to 120°.

3. Mandrel (1, 100) according to any one of the preceding claims, **characterized in that** said first connecting rod (8) is defined by two small plates (8a, 8b) hinged at their ends respectively to the side walls (6c, 6d) of said first end (6a) of said gripping clamp (6) and to said supporting element (7).

4. Mandrel (1, 100) according to any one of the preceding claims, **characterized in that** said supporting element (7) is prevented from rotating with respect to said mandrel body (2), said supporting element (7) being operatively connected to a drive shaft (11) on the opposite side of said gripping clamps (6) by means of a motion conversion system (12) configured to convert the rotary motion of said drive shaft (11) into said rectilinear motion of said supporting element (7) along said longitudinal axis (X).

5. Mandrel (1, 100) according to claim 4, **characterized in that** said impediment to the rotation of said supporting element (7) is obtained by means of a first groove (13) and a second groove (14) defined respectively on the lateral surface (7a) of said supporting element (7) and on the wall (3b) of said central hole (3) and by inserting a mechanical key (15) in said grooves (13, 14), at least one between said first groove (13) and said second groove (14) having a greater length in a direction parallel to said longitudinal axis (X) compared to the length of said mechanical key (15), so that said supporting element (7) is able to slide along said central hole (3) to move said gripping clamps (6) from said locking position to said release position and vice versa.

6. Mandrel (1, 100) according to claim 5, **characterized in that** along said central hole (3) a stop element (16) is defined which is configured so as to prevent the sliding movement of said supporting element (7) towards said inlet mouth (3a) beyond a predefined end position.

7. Mandrel (1, 100) according to claim 6, **characterized in that** said stop element (16) comprises a counteracting wall (16a) created in said central hole (3) having a diameter which is smaller than the diameter of said supporting element (7).

8. Mandrel (1, 100) according to any of the claims from 4 to 7, **characterized in that** said motion conversion system (12) comprises a threaded screw (17) at the level of the end (11a) of said drive shaft (11) facing said supporting element (7) and comprises a counter-threaded nut (18) in said supporting element (7), so that the rotation of said drive shaft (11) causes the screwing or unscrewing of said counter-threaded nut (18) on/from said threaded screw (17) causing the rectilinear movement of said supporting element (7) along said longitudinal axis (X) with respect to said mandrel body (2).

9. Mandrel (100) according to any one of the preceding claims, **characterized in that** it comprises a jaw (19) fixedly coupled with the free end (6b) of each of said gripping clamps (6), said jaw (19) having a gripping point in radial direction at a greater distance than the gripping point of said gripping clamps (6).

## Patentansprüche

1. Dorn (1, 100) zum Einspannen eines Gegenstands, des Typs, der Folgendes umfasst:
• einen Dornkörper (2), der mit Folgendem versehen ist:
- eine zentrale Bohrung (3), die sich einer Längsachse (X) entlang erstreckt und die mit einer Eingangsöffnung (3a) zum Einsetzen von wenigstens einem Teil des besagten Gegenstands versehen ist;
- wenigstens zwei Aufnahmen (4), die sich radial und in jeweils unterschiedliche abgewinkelte, von der besagten Längsachse (X) der besagten zentralen Bohrung (3) ausgehende Richtungen erstrecken;
• eine Spanneinheit (5), Folgendes umfassend:
- wenigstens zwei Spannbacken (6) mit im Wesentlichen länglicher Ausdehnung, wobei jede der besagten Spannbacken (6) in einer der besagten Aufnahmen positioniert (4) ist;
- ein Tragelement (7), das an der der besagten Eingangsöffnung (3a) entgegengesetzten Seite in der besagten zentralen Bohrung (3) positioniert ist, wobei das besagte Tragelement (7) dazu konfiguriert ist, der besagten Längsachse (X) entsprechend die besagte zentrale Bohrung (3) entlangzugleiten, wobei jede der besagten Spannbacken (6) über eine erste Verbindungsstange (8) operativ mit dem besagten Tragelement (7) auf der Ebene eines ersten Endes (6a) desselben verbunden ist,
**dadurch gekennzeichnet, dass** jede der besagten Spannbacken (6) durch eine zweite Verbindungsstange (9) und eine dritte Verbindungsstange (10) operativ mit den Innenwänden (4a, 4b) der besagten Aufnahmen (4) verbunden ist, so dass die geradlinige Bewegung des besagten Tragelements (7) die starre Verschiebung jeder der besagten Spannbacken (6) bezüglich des besagten Dornkörpers (2) bewirkt, zwischen einer Position, in der der besagte Gegenstand blockiert ist, und einer Position, in der er gelöst ist und umgekehrt, wobei jede der besagten zweiten und dritten Verbindungsstangen (9) und (10) durch zwei kleine Plättchen (9a, 9b, 10a, 10b) definiert sind, welche an entgegengesetzten Seiten zwischen der besagten Spannbacke (6) und einer der besagten Wände (4a, 4b) der besagten Aufnahme (4) eingesetzt sind, so dass die besagten Plättchen (9a, 9b, 10a, 10b) während der besagten starren Verschiebung mit den besagten Wänden (4a, 4b) der besagten Aufnahme (4) und den Seitenwänden (6c, 6d) der besagten Spannbacke (6) interagieren.

2. Dorn (1, 100) nach Patentanspruch 1, **dadurch gekennzeichnet, dass:**
- die besagte Spanneinheit (5) drei Spannbacken (6) umfasst, die in einem Winkelabstand gleich 120° voneinander operativ mit dem besagten Tragelement (7) verbunden sind;
- der besagte Dornkörper (2) drei der besagten Aufnahmen (4) umfasst, die in einem Winkelabstand gleich 120° voneinander positioniert sind.

3. Dorn (1, 100) nach einem jeden der vorstehenden Patentansprüche, **dadurch gekennzeichnet, dass** die besagte erste Verbindungsstange (8) durch zwei Plättchen (8a, 8b) definiert ist, die an ihren Enden jeweils an den Seitenwänden (6c, 6d) des besagten ersten Endes (6a) der besagten Spannbacke (6) und an dem besagten Tragelement (7) angelenkt sind.

4. Dorn (1, 100) nach einem jeden der vorstehenden Patentansprüche, **dadurch gekennzeichnet, dass** das besagte Tragelement (7) daran gehindert wird, sich bezüglich des besagten Dornkörpers (2) zu drehen, wobei das besagte Tragelement (7) an der entgegengesetzten Seite der besagten Spannbacken (6) operativ mit einer Antriebswelle (11) verbunden ist durch ein Bewegungsumwandlungssystem (12), welches dazu konfiguriert ist, die Drehbewegung der besagten Antriebswelle (11) in die besagte geradlinige Bewegung des besagten Tragelements (7) an der besagten Längsachse (X) entlang umzuwandeln.

5. Dorn (1, 100) nach Patentanspruch 4, **dadurch gekennzeichnet, dass** die besagte Hinderung der Drehung des besagten Tragelements (7) durch eine erste Rille (13) und eine zweite Rille (14), die jeweils an der Seitenfläche (7a) des besagten Tragelements (7) und an der Wand (3b) der besagten zentralen Bohrung (3) definiert sind, sowie durch Einsetzen eines mechanischen Keils (15) in die besagten Rillen (13, 14) erzielt wird, wobei wenigstens eine von der besagten ersten Rille (13) und der besagten zweiten Rille (14) in einer zu der besagten Längsachse (X) parallelen Richtung länger ist als der besagte mechanische Keil (15), so dass das besagte Tragelement (7) in der Lage ist, an der besagten zentralen Bohrung (3) entlangzugleiten, um die besagten Spannbacken (6) aus der besagten Blockierposition in die besagte Löseposition zu bewegen und umgekehrt.

6. Dorn (1, 100) nach Patentanspruch 5, **dadurch gekennzeichnet, dass** entlang der besagten Bohrung (3) ein Anschlagelement (16) definiert ist, das dazu konfiguriert ist, die Gleitbewegung des besagten Tragelements (7) zu der besagten Eingangsöffnung (3a) über eine vorbestimmte Endposition hinaus zu verhindern.

7. Dorn (1, 100) nach Patentanspruch 6, **dadurch gekennzeichnet, dass** das besagte Anschlagelement (16) eine entgegenwirkende, in der besagten zentralen Bohrung (3) erzeugte Wand (16a) umfasst, deren Durchmesser kleiner ist als der Durchmesser des besagten Tragelements (7).

8. Dorn (1, 100) nach einem jeglichen der Patentansprüche von 4 bis 7, **dadurch gekennzeichnet, dass** das besagte Bewegungsumwandlungssystem (12) eine Gewindeschraube (17) auf der Ebene des Endes (11a) der besagten Antriebswelle (11), welches zu dem besagten Tragelement (7) gerichtet ist, umfasst, und eine Mutter (18) mit Gegengewinde in dem besagten Tragelement (7) umfasst, so dass die Drehung der besagten Antriebswelle (11) das An- oder Losschrauben der besagten Gegengewinde-Mutter (18) an/von der besagten Gewindeschraube (17) bewirkt, was die geradlinige Bewegung des besagten Tragelements (7) entlang der besagten Längsachse (X) bezüglich des besagten Dornkörpers (2) bewirkt.

9. Dorn (100) nach einem jeden der vorstehenden Patentansprüche, **dadurch gekennzeichnet, dass** er eine fest mit dem freien Ende (6b) jeder der besagten Spannbacken (6) gekuppelte Klaue (19) umfasst, wobei der Einspannpunkt der besagte Klaue (19) in radialer Richtung einen größeren Abstand aufweist als der Einspannpunkt der besagten Spannbacken (6).

## Revendications

1. Mandrin (1, 100) apte à saisir un objet, du type comprenant:
• un corps de mandrin (2) pourvu de:
- un trou central (3) qui s'étend le long d'un axe longitudinal (X) et qui est doté d'une bouche d'entrée (3a) pour l'introduction d'au moins une partie dudit objet;
- au moins deux sièges (4) qui s'étendent radialement et dans des directions angulaires différentes entre eux à partir dudit axe longitudinal (X) dudit trou central (3);
• un groupe de préhension (5) comprenant:
- au moins deux pinces de préhension (6) avec extension essentiellement longitudinale, chacune desdites pinces de préhension (6) étant disposée dans un desdits sièges (4);
- un élément de support (7) disposé dans ledit trou central (3) sur le côté opposé de ladite bouche d'entrée (3a), ledit élément de support (7) étant configuré de manière à coulisser le long dudit trou central (3) selon ledit axe longitudinal (X), chacune desdites pinces de préhension (6) étant reliée de manière opérationnelle audit élément de support (7) à hauteur d'une première extrémité (6a) de celle-ci au moyen d'une première tige de connexion (8),
**caractérisé en ce que** chacune desdites pinces de préhension (6) est reliée de manière opérationnelle aux parois intérieures (4a, 4b) desdits sièges (4) au moyen d'une deuxième tige de connexion (9) et d'une troisième tige de connexion (10), de manière à ce que le mouvement rectiligne dudit élément de support (7) détermine la translation rigide de chacune desdites pinces de préhension (6) par rapport audit corps de mandrin (2) entre une position dans laquelle ledit objet est bloqué et une position dans laquelle il est relâché ou vice versa, chacune desdites deuxième tige de connexion (9) et troisième tige de connexion (10) étant définies au moyen de deux petites plaques (9a, 9b, 10a, 10b) insérées sur des côtés opposés entre ladite pince de préhension (6) et une desdites parois (4a, 4b) dudit siège (4) de manière à ce que lesdites plaques (9a, 9b, 10a, 10b) interagissent avec lesdites parois (4a, 4b) dudit siège (4) et les parois latérales (6c, 6d) de ladite pince de préhension (6) durant ladite translation rigide.

2. Mandrin (1, 100) selon la revendication 1, **caractérisé en ce que:**
- ledit groupe de préhension (5) comprend trois pinces de préhension (6) reliées de manière opérationnelle audit élément de support (7) à une distance angulaire entre eux égale à 120°;
- ledit corps de mandrin (2) comprend trois desdits sièges (4) disposés à une distance angulaire entre eux égale à 120°.

3. Mandrin (1, 100) selon l'une quelconque des revendications précédentes, **caractérisé en ce que** ladite première tige de connexion (8) est définie par deux petites plaques (8a, 8b) fixées par charnière à leurs extrémités respectivement aux parois latérales (6c, 6d) de ladite première extrémité (6a) de ladite pince de préhension (6) et audit élément de support (7).

4. Mandrin (1, 100) selon l'une quelconque des revendications précédentes, **caractérisé en ce que** ledit élément de support (7) ne peut pas tourner par rapport audit corps de mandrin (2), ledit élément de support (7) étant relié de manière opérationnelle à un arbre moteur (11) sur le côté opposé desdites pinces de préhension (6) au moyen d'un système de conversion du mouvement (12) configuré de manière à convertir le mouvement rotatoire dudit arbre moteur (11) dans ledit mouvement rectiligne dudit élément de support (7) le long dudit axe longitudinal (X).

5. Mandrin (1, 100) selon la revendication 4, **caractérisé en ce que** ledit empêchement de rotation dudit élément de support (7) est obtenu au moyen d'une première rainure (13) et une deuxième rainure (14) définies respectivement sur la surface latérale (7a) dudit élément de support (7) et sur la paroi (3b) dudit trou central (3) et au moyen de l'introduction d'une clé mécanique (15) dans lesdites rainures (13, 14), au moins une entre ladite première rainure (13) et ladite deuxième rainure (14) présentant une longueur supérieure dans une direction parallèle audit axe longitudinal (X) par rapport à la longueur de ladite clé mécanique (15) de manière à ce que ledit élément de support (7) soit en mesure de coulisser le long dudit trou central (3) pour déplacer lesdites pinces de préhension (6) de ladite position de blocage à ladite position de desserrage et vice versa.

6. Mandrin (1, 100) selon la revendication 5, **caractérisé en ce que** le long dudit trou central (3) est défini un élément de butée (16) qui est configuré pour empêcher le coulissement dudit élément de support (7) vers ladite bouche d'entrée (3a) au-delà d'une position d'extrémité prédéfinie.

7. Mandrin (1, 100) selon la revendication 6, **caractérisé en ce que** ledit élément de butée (16) comprend une paroi de contraste (16a) définie dans ledit trou central (3) ayant un diamètre inférieur par rapport au diamètre dudit élément de support (7).

8. Mandrin (1, 100) selon l'une quelconque des revendications de 4 à 7, **caractérisé en ce que** ledit système de conversion du mouvement (12) comprend une vis filetée (17) à hauteur de l'extrémité (11a) dudit arbre moteur (11) se trouvant en face dudit élément de support (7) et comprend un contre-écrou (18) dans ledit élément de support (7) de manière à ce que la rotation dudit arbre moteur (11) détermine le vissage ou le dévissage dudit contre-écrou (18) sur/de ladite vis filetée (17) en causant le mouvement rectiligne dudit élément de support (7) le long dudit axe longitudinal (X) par rapport audit corps de mandrin (2).

9. Mandrin (100) selon l'une quelconque des revendications précédentes, **caractérisé en ce qu'**il comprend une mâchoire (19) accouplée fixement à l'extrémité libre (6b) de chacune desdites pinces de préhension (6), ladite mâchoire (19) ayant un point de préhension dans la direction radiale à une distance supérieure par rapport au point de préhension desdites pinces de préhension (6).
